# EUROPÄISCHE PATENTSCHRIFT

(11) **EP 2 349 772 B1**
(45) Veröffentlichungstag und Bekanntmachung des Hinweises auf die Patenterteilung: **13.02.2013**
(21) Anmeldenummer: 09741244.9
(22) Anmeldetag: 28.10.2009
(51) Int. Cl.: B60K 25/02

(54) **KUPPLUNGSKOMPRESSOR UND LENKHILFEPUMPENANORDNUNG SOWIE VERFAHREN ZU DEREN STEUERUNG**
CLUTCH COMPRESSOR AND POWER STEERING SYSTEM AND METHOD FOR CONTROLLING THE SAME
COMPRESSEUR DÉBRAYABLE ET POMPE D'ASSISTANCE DE DIRECTION AINSI QUE PROCÉDÉ DE COMMANDE

(30) Priorität: 31.10.2008 DE 102008054164
(43) Veröffentlichungstag der Anmeldung: 03.08.2011
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2009/007696
(87) Internationale Veröffentlichungsnummer: WO 2010/049129

(56) Entgegenhaltungen:
- WO-A-2006/099920

## Beschreibung

Die Erfindung betrifft ein Fahrzeug mit einer von einem Motor angetriebenen Antriebswelle, die von dem Motor erzeugtes Drehmoment an einen ersten Antrieb überträgt, einem Kupplungskompressor und einer Lenkhilfepumpe, wobei die Lenkhilfepumpe von einer Abtriebswelle angetrieben ist, die Drehmoment von dem ersten Antrieb an die Lenkhilfepumpe überträgt.

Die Erfindung betrifft weiterhin ein Verfahren zur Steuerung einer Lenkhilfepumpe und eines Kupplungskompressors in einem Fahrzeug mit einer von einem Motor angetriebenen Antriebswelle, die von dem Motor erzeugtes Drehmoment an einen ersten Antrieb überträgt, einem Kupplungskompressor und einer Lenkhilfepumpe, wobei die Lenkhilfepumpe von einer Abtriebswelle angetrieben wird, die Drehmoment von dem ersten Antrieb an die Lenkhilfepumpe überträgt.

Moderne Fahrzeuge verfügen zum Antrieb des Fahrzeugs über einen Motor und über eine Vielzahl weiterer Nebenaggregate, deren Zusammenwirken erst einen sicheren Betrieb des Fahrzeugs ermöglichen. Als Nebenaggregate werden dabei alle Hilfsmaschinen des Fahrzeugs bezeichnet, die von dem Motor direkt oder indirekt mit angetrieben werden und die für den Betrieb des Fahrzeugs notwendig beziehungsweise bei diesem hilfreich sind. Eine den Motor mit Kühlwasser versorgende Wasserpumpe, eine die aufzubringende Lenkkraft reduzierende Lenkhilfepumpe und ein insbesondere bei Nutzfahrzeugen vorkommender Kupplungskompressor, zur Verstärkung der vom Fahrer des Fahrzeugs aufgebrachten Bremskraft, sind Beispiele für Nebenaggregate. Grundsätzlich können Nebenaggregate in zwei Klassen eingeteilt werden. Eine erste Klasse von Nebenaggregaten umfasst alle Nebenaggregate, deren durchgehender Betrieb für den Betrieb des Motors beziehungsweise des Fahrzeugs notwendig sind. Zu diesen Nebenaggregaten zählen beispielsweise eine Kraftstoffpumpe und die Kühlwasserpumpe. Eine zweite Klasse von Nebenaggregaten umfasst alle nur zeitweise für den Betrieb des Motors beziehungsweise des Fahrzeugs notwendigen Nebenaggregate. Zu diesen zählen beispielsweise ein Anlasser, der nur zum Starten des Motors benötigt wird, die Lenkhilfepumpe, die lediglich unterstützend bei einer Lenkbewegung des Fahrzeugs benötigt wird, und der Kupplungskompressor, dessen Betrieb nur notwendig ist, wenn kein ausreichender Druckluftvorrat mehr vorhanden ist. Nebenaggregate, die der ersten Klasse zugehörig sind, werden üblicherweise direkt von dem Motor angetrieben. Nebenaggregate, die der zweiten Klasse zugehörig sind, können bei Bedarf angetrieben werden, wobei der Antrieb unabhängig von dem Motor erfolgen kann, wie zum Beispiel der Antrieb des den Motor startenden Anlassers über einen Elektromotor mit in einer Batterie gespeicherten Energie. Als Antrieb wird dabei eine mechanische Vorrichtung bezeichnet, die ein an einer Antriebswelle eingebrachtes Drehmoment bzw. Kraft auf eine Abtriebswelle überträgt. Der Antrieb kann beispielsweise ein Rädertrieb, ein Riementrieb oder ein Kettentrieb sein.

Nebenaggregate verbrauchen Energie und tragen daher zum Kraftstoffverbrauch des Fahrzeugs bei. Zur Senkung des Kraftstoffverbrauchs ist es daher erstrebenswert, Nebenaggregate nur zu betreiben, wenn sie tatsächlich benötigt werden. Auf der anderen Seite kann der Dauerbetrieb eines Nebenaggregates unter Sicherheitsaspekten vorteilhaft oder sogar vorgeschrieben sein. Die Lenkhilfepumpe gehört zu den Nebenaggregaten, deren durchgängiger Betrieb aus Sicherheitsgründen vorteilhaft ist, da eine zunächst abgeschaltete Lenkhilfepumpe nur mit einer zeitlichen Verzögerung unterstützend bei einem Lenkvorgang wirken kann.

Es ist bekannt, den Kupplungskompressor direkt durch den Antriebsmotor anzutreiben und die Lenkhilfepumpe über den Kupplungskompressor anzutreiben. Es ist auch bekannt, die Lenkhilfepumpe durch den Antriebsmotor anzutreiben und den Kupplungskompressor über die Lenkhilfepumpe anzutreiben. Insbesondere bei Kupplungskompressoren sind die Drehmomentstöße beim Einkuppeln sehr groß, da keine Drehmomentgrundlast während der ausgekuppelten Phase des Kupplungskompressors vorhanden ist, weshalb hier die Antriebe mit besonders hohen Spitzenmomenten belastet sind.

Nachteilig bei diesen Antriebskonzepten ist, dass in einem Defektfall, bei dem der Antrieb des direkt über den Motor angetriebenen Nebenaggregats ausfällt, das über dieses Nebenaggregat angetriebene weitere Nebenaggregat ebenfalls ausfällt. Dies ist besonders nachteilig, da beispielsweise der gleichzeitige Ausfall des Kupplungskompressors als Nebenaggregat und der Lenkhilfepumpe als weiteres Nebenaggregat einem Bremsversagen bei gleichzeitigem Verlust einer Lenkfähigkeit entspricht.

Der Erfindung liegt die Aufgabe zugrunde, eine Anordnung von Kupplungskompressor und Lenkhilfepumpe bereitzustellen, wobei der Ausfall des einen Nebenaggregats nicht automatisch den Ausfall des anderen Nebenaggregats nach sich zieht und gleichzeitig die Übersetzungsverhältnisse zum Antrieb von Kupplungskompressor und Lenkhilfepumpe unabhängig gewählt werden können.

Diese Aufgabe wird mit den Merkmalen des unabhängigen Anspruches gelöst.

Vorteilhafte Ausführungsformen der Erfindung sind in den abhängigen Ansprüchen gegeben.

Die Erfindung baut auf dem gattungsgemäßen Fahrzeug dadurch auf, dass eine weitere Antriebswelle zum Antreiben des Kupplungskompressors vorgesehen ist und dass die weitere Antriebswelle an einem zweiten Antrieb angeordnet ist, an den Drehmoment von der von dem Motor angetriebenen Antriebswelle übertragen wird, wobei die weitere Abtriebswelle Drehmoment von dem zweiten Antrieb an den Kupplungskompressor überträgt.

Nützlicherweise kann dabei vorgesehen sein, dass der erste Antrieb und der zweite Antrieb verschieden sind. Sowohl der erste Antrieb als auch der zweite Antrieb werden von dem Motor angetrieben, wodurch die Übertragung des Drehmomentes auf die Lenkhilfepumpe und den Kupplungskompressor jeweils unabhängig in dem ersten Antrieb und dem zweiten Antrieb stattfindet. Der Ausfall des ersten beziehungsweise des zweiten Antriebs stört daher die Funktion des über den jeweils anderen Antrieb angetriebenen Nebenaggregats nicht, wodurch eine deutliche Verbesserung der Sicherheit erreicht werden kann. Weiterhin ist es möglich, die Übersetzung zwischen dem Motor und der Lenkhilfepumpe bzw. dem Kupplungskompressor verschieden zu wählen, wobei insbesondere die Lenkhilfepumpe durch ein angepasstes Schluckvolumen baulich optimiert werden kann.

Alternativ kann vorgesehen sein, dass der zweite Antrieb identisch mit dem ersten Antrieb ist und dass die weitere Abtriebswelle parallel zur Abtriebswelle an dem ersten Antrieb angeordnet ist, wobei die Übertragung des Drehmomentes von der Antriebswelle auf die Abtriebswelle und die weitere Abtriebswelle unabhängig voneinander erfolgt. Auch bei dieser Möglichkeit das Drehmoment des Motors auf die beiden Nebenaggregate zu übertragen, führt ein Defekt beispielsweise der die Lenkhilfepumpe antreibenden Abtriebswelle nicht zu einer Funktionsstörung des von der weiteren Abtriebswelle Kupplungskompressors und umgekehrt, wobei ebenfalls die Übersetzung frei wählbar ist. Auf diese Weise lässt sich ebenfalls die Betriebssicherheit des Fahrzeugs verbessern, wobei gleichzeitig die Nebenaggregate baulich optimiert werden können.

Vorteilhafterweise kann vorgesehen sein, dass der Kupplungskompressor über eine von einem Steuergerät schaltbare Kupplung mit der weiteren Abtriebswelle gekoppelt ist. Da der Betrieb des Kupplungskompressors nur notwendig ist, wenn der Druck in einem in dem Fahrzeug angeordneten Druckbehälter unter einen vorgegebenen Wert sinkt, kann durch das vollständige Abschalten des Kupplungskompressors mittels einer Kupplung Kraftstoff eingespart werden, ohne die Sicherheit des Fahrzeugs zu gefährden.

Nützlicherweise kann vorgesehen sein, dass das Steuergerät zumindest eine weitere Funktion eines Lufttrockners steuert. Im Zusammenhang mit der Druckluftaufbereitung in , einem Fahrzeug fallen weitere Steuervorgänge an, beispielsweise bei einem Regenerationsvorgang eines in einem Lufttrockner verwendeten Trockenmittels, die üblicherweise von einem zweiten Steuergerät gesteuert werden. Die Integration sämtlicher im Zusammenhang mit Kupplungskompressor und Lufttrockner stehender Funktionen erlaubt daher die Einsparung elektronischer Bauteile, da das zweite Steuergerät eingespart werden kann.

Vorteilhafterweise kann vorgesehen sein, dass ein weiteres Steuergerät vorgesehen ist, welches die Lenkhilfepumpe steuert. Auch im Zusammenhang mit der Lenkhilfepumpe fallen Steuervorgänge an, die von einem weiteren elektronischen Steuergerät ausgeführt werden können. Das weitere Steuergerät ist damit unabhängig von dem die Kupplung des Kupplungskompressors steuernden Steuergerät, wodurch eine vollständige Redundanz zwischen Lenkhilfepumpe und Kupplungskompressor gewährleistet ist.

Nützlicherweise kann vorgesehen sein, dass das weitere Steuergerät in einer Weise ausgebildet ist, dass das weitere Steuergerät zumindest den Ausgangsdruck der Lenkhilfepumpe erfasst. Der Ausgangsdruck der Lenkhilfepumpe kann beispielsweise als Anhaltspunkt für einen Defekt dienen.

Vorteilhafterweise kann vorgesehen sein, dass das Steuergerät oder das weitere Steuergerät in einer Weise ausgebildet sind, dass das Steuergerät oder das weitere Steuergerät die Geschwindigkeit des Fahrzeugs erfassen. Aus der erfassten Geschwindigkeit des Fahrzeugs kann das weitere Steuergerät Rückschlüsse auf den Ausgangsdruck der Lenkhilfepumpe ziehen.

Insbesondere kann dabei vorgesehen sein, dass das weitere Steuergerät geeignet ist, das Schluckvolumen der Lenkhilfepumpe fahrzeuggeschwindigkeitsabhängig anzupassen. Das Variieren des Schluckvolumens der Lenkhilfepumpe erlaubt eine von der Motordrehzahl unabhängige Regelung des von der Lenkhilfepumpe bereitgestellten Drucks, wobei durch eine Überlagerung beider Anpassungsmöglichkeiten eine optimale Regelung des von der Lenkhilfepumpe bereitgestellten Drucks erreichbar ist.

Nützlicherweise kann vorgesehen sein, dass das Steuergerät und das weitere Steuergerät in einer Weise ausgebildet sind, dass zumindest Fehlermeldungen zwischen dem Steuergerät und dem weiteren Steuergerät ausgetauscht werden. Ein angepasster Betrieb, d. h. ein Notbetrieb, bei dem eventuell nicht mehr alle Funktionen des nicht von einem Defekt betroffenen Nebenaggregats zur Verfügung stehen, um die Sicherheit zu erhöhen bzw. gesetzliche Auflagen zu erfüllen, ist so realisierbar.

Vorteilhafterweise kann vorgesehen sein, dass das Steuergerät in einer Weise ausgebildet ist, dass das Steuergerät aus der Geschwindigkeit des Fahrzeugs Abschaltsequenzen und Abschaltdrücke für den Kupplungskompressor berechnet. Das vollständige Abschalten des Kupplungskompressors durch die Kupplung, wenn ein ausreichender Druckluftvorrat vorhanden ist, erlaubt eine maximale Kraftstoffeinsparung während des Betriebs des Fahrzeugs. Da die Fahrzeuggeschwindigkeit Rückschlüsse auf die geförderte Luftmenge zulässt, kann eine Synchronisation der Luftförderphasen des Kupplungskompressors mit erwarteten Schubphasen des Motors erreicht werden. Die Nutzung einer Schubphase des Motors als Luftförderphase des Kupplungskompressors ist energetisch besonders günstig, da in den Schubphasen kaum Kraftstoff verbraucht wird.

Nützlicherweise kann vorgesehen sein, dass das weitere Steuergerät in einer Weise ausgebildet ist, dass das weitere Steuergerät aus der Geschwindigkeit des Fahrzeugs einen Lenkhilfedruck und die notwendige Lenkhilfeübersetzung berechnet, wobei eine Anpassung des Schluckvolumens der Pumpe erfolgen kann. Die Geschwindigkeit des Fahrzeugs erlaubt Rückschlüsse sowohl auf den erwarteten als auch auf den benötigten Lenkhilfedruck. Es kann so beispielsweise ein Defekt der Lenkhilfepumpe detektiert werden.

Die Erfindung baut auf dem gattungsgemäßen Verfahren zur Steuerung einer Lenkhilfepumpe und eines Kupplungskompressors dadurch auf, dass Drehmoment von der von dem Motor angetriebenen Antriebswelle auf einen zweiten Antrieb übertragen wird und dass der Kupplungskompressor von einer an den zweiten Antrieb angeordneten weiteren Abtriebswelle angetrieben wird.

Auf dieser Grundlage werden die Vorteile und Besonderheiten des erfindungsgemäßen Systems auch im Rahmen eines Verfahrens umgesetzt.

Das Verfahren kann vorteilhafterweise dadurch weitergebildet werden, dass zumindest Fehlermeldungen zwischen einem eine Kompressorkupplung steuernden Steuergerät und einem die Lenkhilfepumpe steuernden weiteren Steuergerät ausgetauscht werden.

Weiterhin kann vorgesehen sein, dass das Steuergerät oder das weitere Steuergerät die Geschwindigkeit des Fahrzeugs erfassen.

Nützlicherweise kann vorgesehen sein, dass das Steuergerät aus der Geschwindigkeit des Fahrzeugs Abschaltsequenzen und Abschaltdrücke für den Kupplungskompressor berechnet.

Weiterhin kann vorgesehen sein, dass das weitere Steuergerät aus der Geschwindigkeit des Fahrzeugs einen Lenkhilfedruck berechnet.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung eines Fahrzeugs mit Motor und Nebenaggregaten sowie den zugehörigen Steuergeräten;
- Figur 2: eine weitere schematische Darstellung eines Fahrzeugs mit Motor und Nebenaggregaten sowie den zugehörigen Steuergeräten;
- Figur 3: eine schematische Seitenansicht eines Rädertriebs und
- Figur 4: den zeitlichen Verlauf der Drehmomentaufnahme zweier verschiedener Energiesparsysteme für Kupplungskompressoren.

In den nachfolgenden Zeichnungen bezeichnen gleiche Bezugszeichen gleiche oder gleichartige Teile.

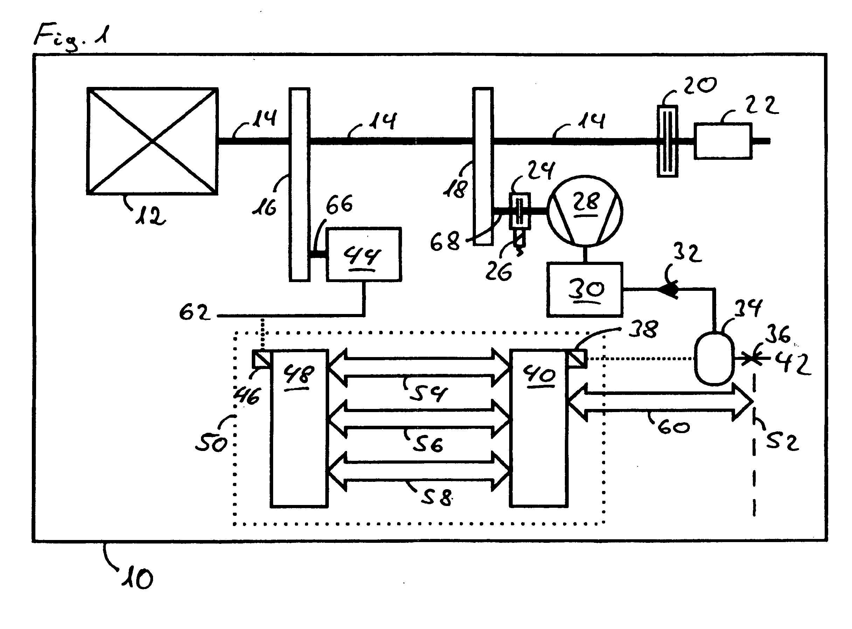

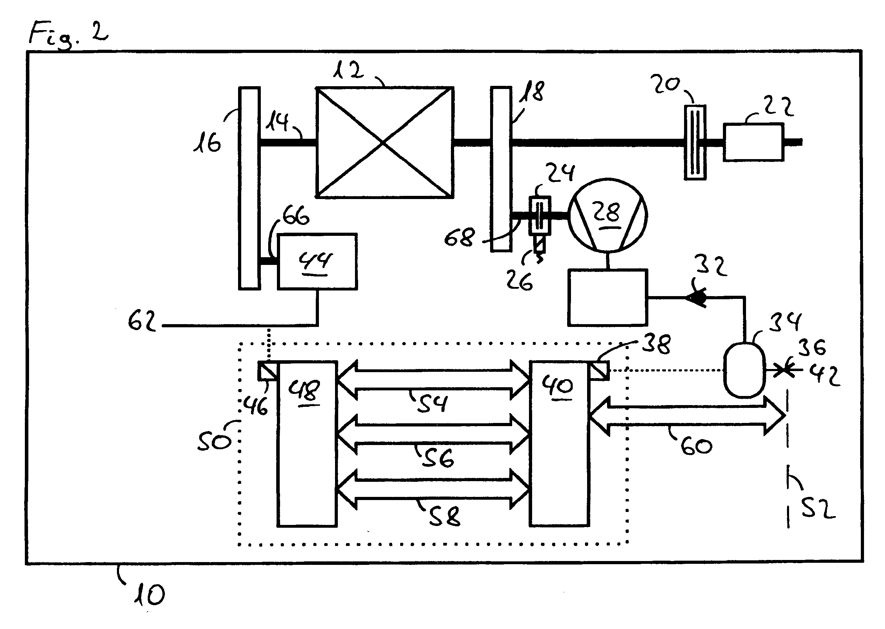

Figuren 1 und 2 zeigen eine schematische Darstellung eines Fahrzeugs mit Motor und Nebenaggregaten sowie den zugehörigen Steuergeräten. In einem Fahrzeug 10 ist ein Motor 12 angeordnet, der über eine Antriebswelle 14 und eine Kupplung 20 Drehmoment auf ein Getriebe 22 überträgt. Das Getriebe 22 ist weiterhin mit nicht dargestellten Mitteln verbunden, die den mechanischen Vortrieb des Fahrzeugs 10 realisieren. An der Antriebswelle 14 sind ein erster Antrieb 16 und ein zweiter Antrieb 18 angeordnet. Der erste Antrieb 16 und der zweite Antrieb 18 können beispielsweise ein Rädertrieb, ein Riementrieb mit einem Zahnriemen oder ein Kettentrieb mit einer Steuerkette sein. Die Antriebswelle 14 überträgt Drehmoment von dem Motor 12 auf den ersten Antrieb 16 und den zweiten Antrieb 18. Weiterhin ist eine Abtriebswelle 66 an dem ersten Antrieb 16 angeordnet, die Drehmoment aus den ersten Antrieb 16 entnimmt und eine Lenkhilfepumpe 44 antreibt. Eine weitere Abtriebswelle 68 ist an dem zweiten Antrieb 18 angeordnet, die Drehmoment von dem zweiten Antrieb 18 aufnimmt und über eine Kompressorkupplung 24 einen Kupplungskompressor 28 antreibt. Die Kompressorkupplung 24 sowie ein Lufttrockner 30 wird von einem Steuergerät 40 und die Lenkhilfepumpe 44 von einem weiteren Steuergerät 48 gesteuert. Das Steuergerät 40 und das weitere Steuergerät 48 tauschen Informationen über eine Motordrehzahl 54, eine Fahrzeuggeschwindigkeit 56 und einen Fehlerstatus 58 untereinander aus, wobei zusätzliche Information auch über einen Anschluss 52 an den CAN Bus bezogen werden kann. Die Fahrzeuggeschwindigkeit wird zum Beispiel zunächst von dem Tachographen oder Raddrehzahlsensoren bestimmt, über den Anschluss 52 von einem der beiden Steuergeräte 40, 48 bezogen und anschließend untereinander ausgetauscht. Die Fahrzeuggeschwindigkeit dient dann beispielsweise, zusammen mit weiterer Information wie der Motordrehzahl, zur Kupplungskompressorsteuerung durch das Steuergerät 40 bzw. der Bestimmung von dem benötigten/bereitgestellten Lenkhilfepumpendruck durch das weitere Steuergerät 48. Die beiden Steuergeräte 40, 48 können auch als ein kombiniertes Steuergerät 50 ausgeführt sein, wobei jedoch für den Fehlerfall auf vollständige Redundanz zu achten ist. Das weitere Steuergerät 48 steuert die Funktionen, die mit der Lenkhilfeunterstützung zusammenhängen und kann beispielsweise bei hoher Geschwindigkeit des Fahrzeugs die Lenkhilfeunterstützung abschalten. Zumindest eines der Steuergeräte 40, 48 bezieht Information hinsichtlich eines Motordrehmoments 60 über den Anschluss 52 an den CAN Bus des Fahrzeugs 10. Das Motordrehmoment 60 kann beispielsweise zur Detektion von Schubphasen des Motors 12 verwendet werden. Die Lenkhilfepumpe 44 stellt über einen Anschluss 62 Hydraulikdruck für eine Servolenkung bereit, wobei ein Drucksensor 46 den von der Lenkhilfepumpe 44 bereitgestellten Druck erfasst und an das weitere Steuergerät 48 übermittelt. Der Kupplungskompressor 28 kann durch die von einem Magnetventil 26 schaltbare Kompressorkupplung 24 vollständig stillgelegt werden. Schaltbar ist das Magnetventil 26 von dem Steuergerät 40. Der Kupplungskompressor 28 erzeugt komprimierte Luft, die in einem Lufttrockner 30 aufbereitet wird und in einem hinter einem Rückschlagventil 32 angeordneten Hochdruckbehälter 34 gespeichert wird. Der in dem Hochdruckbehälter 34 anstehende Druck wird durch einen Drucksensor 38 erfasst und an das Steuergerät 40 übermittelt. Die aufbereitete Druckluft wird stromabwärts einer Drossel 36 über einen Druckluftanschluss 42 an die einzelnen nicht dargestellten Verbraucher weitergeleitet. Wesentlicher Unterschied zwischen Figuren 1 und 2 ist die Anordnung des ersten Antriebs 16 und des zweiten Antriebs 18 an der Antriebswelle 14 hinsichtlich des Motors 12.

Die Kompressorkupplung 24 ermöglicht die Überführung des Kupplungskompressors 28 in einen energiesparenden Zustand, wobei die Funktion der Lenkhilfepumpe 44 nicht beeinflusst wird. Weiterhin hat ein Defekt im ersten Antrieb 16 keine Auswirkung auf die Funktionalität des Kupplungskompressors 28 beziehungsweise ein Defekt im zweiten Antrieb 18 keine Auswirkung auf die Funktionalität der Lenkhilfepumpe 44. Lenkhilfepumpe 44 und Kupplungskompressor 28 sind also parallel in redundanter Weise angetrieben, weshalb die Lenkfähigkeit bei einem Bremsversagen aufgrund fehlender Druckluft erhalten bleib und umgekehrt auch die Bremsfähigkeit bei einem Ausfall der Lenkhilfeunterstützung gewährleistet bleibt.

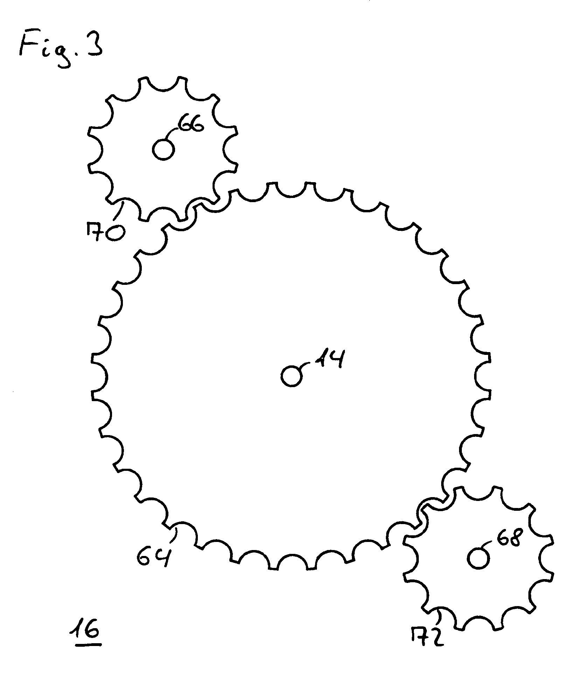

Figur 3 zeigt eine schematische Seitenansicht eines Rädertriebs. Die Antriebswelle 14 treibt über Zahnräder 64, 70, 72 die Abtriebswelle 66 und die weitere Abtriebswelle 68 parallel zueinander an. Dabei ist das erste Zahnrad 64 drehfest mit der Antriebswelle 14 verbunden, das zweite Zahnrad 70 drehfest mit der Abtriebswelle 66 verbunden und das dritte Zahnrad 72 drehfest mit der weiteren Abtriebswelle 68 verbunden. Im Defektfall des dargestellten Antriebs 16 würde üblicherweise entweder das zweite Zahnrad 70 oder das dritte Zahnrad 72 brechen, weshalb der Antrieb der jeweils anderen Abtriebswelle gesichert wäre. Das erste Zahnrad 64, welches Drehmoment von der Antriebswelle 14 in den Antrieb 16 einbringt wird nicht zu Bruch gehen, da die positive Zahnüberdeckung dem antreibenden Zahnrad 64 eine größere Zahnradstabilität verleit. In dem dargestellten Antrieb 16 sind die Abtriebswelle 66 und die weitere Abtriebswelle 68 parallel zueinander angeordnet. Die Darstellung entspricht somit dem Fall, dass der zweite Antrieb identisch mit dem ersten Antrieb 16 ist. Die Größe des zweiten Zahnrades 70 und des dritten Zahnrades 72 kann unabhängig voneinander frei gewählt werden, wodurch verschiedene Übersetzungsverhältnisse für Lenkhilfepumpe und Kupplungskompressor realisierbar sind.

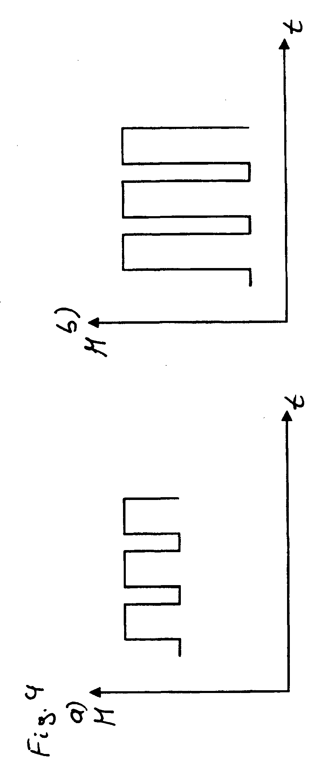

Figur 4 zeigt den zeitlichen Verlauf der Drehmomentaufnahme zweier verschiedener Energiesparsysteme für Kupplungskompressoren. Die horizontale Achse entspricht dabei der Zeit t während die vertikale Achse dem aufgenommenen Drehmoment M entspricht. In Figur 4a ist die Drehmomentaufnahme eines Kupplungskompressors gezeigt, der periodisch zwischen einer Luftförderphase und einem entlasteten Zustand geschaltet wird. Im entlasteten Zustand drehen die beweglichen Teile des Kupplungskompressors mit, jedoch wird keine Druckluft erzeugt. In Figur 4b wird ein Kupplungskompressor periodisch zwischen einer Luftförderphase und einem abgeschalteten Zustand geschaltet. Dabei wird eine dem Kupplungskompressor vorgelagerte Kupplung geöffnet, wodurch nur noch ein Teil der den Kupplungskompressor antreibenden Abtriebswelle im abgeschalteten Zustand Drehmoment aufnimmt. Aufgrund der geringeren Drehmomentaufnahme des Kupplungskompressors im abgeschalteten Zustand ergibt sich eine Energieersparnis.

### Bezugszeichenliste

- 10: Fahrzeug
- 12: Motor
- 14: Antriebswelle
- 16: erster Antrieb
- 18: zweiter Antrieb
- 20: Kupplung
- 22: Getriebe
- 24: Kompressorkupplung
- 26: Magnetventil
- 28: Kupplungskompressor
- 30: Lufttrockner
- 32: Rückschlagventil
- 34: Hochdruckbehälter
- 36: Drossel
- 38: Drucksensor
- 40: Steuergerät
- 42: Druckluftanschluss
- 44: Lenkhilfepumpe
- 46: Drucksensor
- 48: weiteres Steuergerät
- 50: kombiniertes Steuergerät
- 52: Anschluss
- 54: Motordrehzahl
- 56: Fahrzeuggeschwindigkeit
- 58: Fehlerstatus
- 60: Motordrehmoment
- 62: Anschluss
- 64: erstes Zahnrad
- 66: Abtriebswelle
- 68: weitere Abtriebswelle
- 70: zweites Zahnrad
- 72: drittes Zahnrad

## Patentansprüche

1. Fahrzeug (10) mit
- einer von einem Motor (12) angetriebenen Antriebswelle (14), die von dem Motor (12) erzeugtes Drehmoment an einen ersten Antrieb (16) überträgt,
- einem Kupplungskompressor (28) und
- einer Lenkhilfepumpe (44), wobei die Lenkhilfepumpe (44) von einer Abtriebswelle (66) angetrieben ist, die Drehmoment von dem ersten Antrieb (16) an die Lenkhilfepumpe (44) überträgt,
**dadurch gekennzeichnet,**
- **dass** eine weitere Abtriebswelle (68) zum Antreiben des Kupplungskompressors (28) vorgesehen ist und
- **dass** die weitere Abtriebswelle (68) an einem zweiten Antrieb (18) angeordnet ist, an den Drehmoment von der von dem Motor (12) angetriebenen Antriebswelle (14) übertragen wird, wobei die weitere Abtriebswelle (68) Drehmoment von dem zweiten Antrieb (18) an den Kupplungskompressor (28) überträgt.

2. Fahrzeug (10) nach Anspruch 1, **dadurch gekennzeichnet, dass** der erste Antrieb (16) und der zweite Antrieb (18) verschieden sind.

3. Fahrzeug (10) nach Anspruch 1, **dadurch gekennzeichnet,**
- **dass** der zweite Antrieb (18) identisch mit dem ersten Antrieb (16) ist und
- **dass** die weitere Abtriebswelle (68) parallel zur Abtriebswelle (66) an dem ersten Antrieb (16) angeordnet ist, wobei die Übertragung des Drehmomentes von der Antriebswelle (14) auf die Abtriebswelle (66) und die weitere Abtriebswelle (68) unabhängig voneinander erfolgt.

4. Fahrzeug (10) nach einem der vorhergehenden Ansprüche, **dadurch gekennzeichnet, dass** der Kupplungskompressor (28) über eine von einem Steuergerät (40) schaltbare Kupplung (24) mit der weiteren Abtriebswelle (68) gekoppelt ist.

5. Fahrzeug (10) nach einem der vorhergehenden Ansprüche, **dadurch gekennzeichnet, dass** das Steuergerät (40) zumindest eine weitere Funktion eines Lufttrockners (30) steuert.

6. Fahrzeug (10) nach einem der vorhergehenden Ansprüche, **dadurch gekennzeichnet, dass** ein weiteres Steuergerät (48) vorgesehen ist, welches die Lenkhilfepumpe (44) steuert.

7. Fahrzeug (10) nach einem der vorhergehenden Ansprüche, **dadurch gekennzeichnet, dass** das weitere Steuergerät (48) in einer Weise ausgebildet ist, dass das weitere Steuergerät (48) zumindest den Ausgangsdruck der Lenkhilfepumpe (44) erfasst.

8. Fahrzeug (10) nach einem der vorhergehenden Ansprüche, **dadurch gekennzeichnet, dass** das Steuergerät (40) oder das weitere Steuergerät (48) in einer Weise ausgebildet sind, dass das Steuergerät (40) oder das weitere Steuergerät (48) die Geschwindigkeit des Fahrzeugs (10) erfassen.

9. Fahrzeug (10) nach einem der vorhergehenden Ansprüche, **dadurch gekennzeichnet, dass** das weitere Steuergerät (48) geeignet ist, das Schluckvolumen der Lenkhilfepumpe (44) fahrzeuggeschwindigkeitsabhängig anzupassen.

10. Fahrzeug (10) nach einem der vorhergehenden Ansprüche, **dadurch gekennzeichnet, dass** das Steuergerät (40) und das weitere Steuergerät (48) in einer Weise ausgebildet sind, dass zumindest Fehlermeldungen zwischen dem Steuergerät (40) und dem weiteren Steuergerät (48) ausgetauscht werden.

11. Fahrzeug (10) nach einem der vorhergehenden Ansprüche, **dadurch gekennzeichnet, dass** das Steuergerät (40) in einer Weise ausgebildet ist, dass das Steuergerät (40) aus der Geschwindigkeit des Fahrzeugs (10) Abschaltsequenzen und Abschaltdrücke für den Kupplungskompressor (28) berechnet.

12. Fahrzeug (10) nach einem der vorhergehenden Ansprüche, **dadurch gekennzeichnet, dass** das weitere Steuergerät (48) in einer weise ausgebildet ist, dass das weitere Steuergerät (48) aus der Geschwindigkeit des Fahrzeugs (10) einen Lenkhilfedruck berechnet.

13. Verfahren zur Steuerung einer Lenkhilfepumpe (44) und eines Kupplungskompressors (28) in einem Fahrzeug (10) mit
- einer von einem Motor (12) angetriebenen Antriebswelle (14), die von dem Motor (12) erzeugtes Drehmoment an einen ersten Antrieb (16) überträgt,
- einem Kupplungskompressor (28) und
- einer Lenkhilfepumpe (44), wobei die Lenkhilfepumpe (44) von einer Abtriebswelle (66) angetrieben wird, die Drehmoment von dem ersten Antrieb (16) an die Lenkhilfepumpe (44) überträgt,
**dadurch gekennzeichnet,**
- **dass** Drehmoment von der von dem Motor (12) angetriebenen Antriebswelle (14) auf einen zweiten Antrieb (18) übertragen wird und
- **dass** der Kupplungskompressor (28) von einer an dem zweiten Antrieb (18) angeordneten weiteren Abtriebswelle (68) angetrieben wird.

14. Verfahren nach Anspruch 13, **dadurch gekennzeichnet, dass** zumindest Fehlermeldungen zwischen einem eine Kompressorkupplung (24) steuernden Steuergerät (40) und einem weiteren die Lenkhilfepumpe (44) steuernden Steuergerät (48) ausgetauscht werden.

15. Verfahren nach Anspruch 13 oder 14, **dadurch gekennzeichnet, dass** das Steuergerät (40) oder das weitere Steuergerät (48) die Geschwindigkeit des Fahrzeugs (10) erfassen.

16. Verfahren nach Anspruch 15, **dadurch gekennzeichnet, dass** das Steuergerät (40) aus der Geschwindigkeit des Fahrzeugs (10) Abschaltsequenzen und Abschaltdrücke für den Kupplungskompressor (28) berechnet.

17. Verfahren nach Anspruch 15 oder 16, **dadurch gekennzeichnet, dass** das weitere Steuergerät (48) aus der Geschwindigkeit des Fahrzeugs (10) einen Lenkhilfedruck berechnet.

## Claims

1. Vehicle (10), comprising
- a drive shaft (14) that is driven by an engine (12) and that transmits torque generated by the engine (12) to a first drive (16),
- a clutch compressor (28), and
- a power steering pump (44), the power steering pump (44) being driven by an output shaft (66) that transmits torque from the first drive (16) to the power steering pump (44),
**characterised in that**
- a further output shaft (68), for driving the clutch compressor (28), is provided, and
- the further output shaft (68) is disposed on a second drive (18), to which torque is transmitted by the drive shaft (14) that is driven by the engine (12), the further output shaft (68) transmitting torque from the second drive (18) to the clutch compressor (28).

2. Vehicle (10( according to claim 1, **characterised in that** the first drive (16) and the second drive (18) differ.

3. Vehicle (10) according to claim 1, **characterised in that**
- the second drive (18) is identical to the first drive (16), and
- the further output shaft (68) is disposed parallel to the output shaft (66) on the first drive (16), the transmission of the torque from the drive shaft (14) to the output shaft (66) and to the further output shaft (68) being effected independently of one another.

4. Vehicle (10) according to any of the preceding claims, **characterised in that** the clutch compressor (28) is coupled to the further output shaft (68) via a clutch (24) that can be operated by a control unit (40).

5. Vehicle (10) according to any of the preceding claims, **characterised in that** the control unit (40) controls at least one further function of an air drier (30).

6. Vehicle (10) according to any of the preceding claims, **characterised in that** a further control unit (48) is provided, which controls the power steering pump (44).

7. Vehicle (10) according to any of the preceding claims, **characterised in that** the further control unit (48) is designed in such a manner that the further control unit (48) senses at least the output pressure of the power steering pump (44).

8. Vehicle (10) according to any of the preceding claims, **characterised in that** the control unit (40) or the further control unit (48) is designed in such a manner that the control unit (40) or the further control unit (48) senses the speed of the vehicle (10).

9. Vehicle (10) according to any of the preceding claims, **characterised in that** the further control unit (48) is suitable for adapting the displacement volume of the power steering pump (44) in dependence on vehicle speed.

10. Vehicle (10) according to any of the preceding claims, **characterised in that** the control unit (40) and the further control unit (48) are designed in such a manner that at least error messages are exchanged between the control unit (40) and the further control unit (48).

11. Vehicle (10) according to any of the preceding claims, **characterised in that** the control unit (40) is designed in such a manner that the control unit (40) calculates switch-off sequences and switch-off pressures for the clutch compressor (28) from the speed of the vehicle (10).

12. Vehicle (10) according to any of the preceding claims, **characterised in that** the further control unit (48) is designed in such a manner that that the further control unit (48) calculates a power steering pressure from the speed of the vehicle (10).

13. Method for controlling a power steering pump (44) and a clutch compressor (28) in a vehicle (10) comprising
- a drive shaft (14) that is driven by an engine (12) and that transmits torque generated by the engine (12) to a first drive (16),
- a clutch compressor (28), and
- a power steering pump (44), the power steering pump (44) being driven by an output shaft (66) that transmits torque from the first drive (16) to the power steering pump (44),
**characterised in that**
- torque is transmitted from the drive shaft (14) driven by the engine (12) to a second drive (18), and
- the clutch compressor (28) is driven by a further output shaft (68) disposed on the second drive (18).

14. Method according to claim 13, **characterised in that** at least error messages are exchanged between a control unit (40) that controls a compressor clutch (24) and a further control unit (48) that controls the power steering pump (44).

15. Method according to claim 13 or 14, **characterised in that** the control unit (40) or the further control unit (48) senses the speed of the vehicle (10).

16. Method according to claim 15, **characterised in that** the control unit (40) calculates switch-off sequences and switch-off pressures for the clutch compressor (28) from the speed of the vehicle (10).

17. Method according to claim 15 or 16, **characterised in that** the further control unit (48) calculates a power steering pressure from the speed of the vehicle (10).

## Revendications

1. Véhicule (10) comprenant
- un arbre (14) d'entraînement, qui est entraîné par un moteur (12) et qui transmet à un premier entraînement (16) le couple de rotation produit par le moteur,
- un compresseur (28) débrayable et
- une pompe (44) d'assistance de direction, la pompe (44) d'assistance de direction étant entraînée par un arbre (66) de sortie, qui transmet à la pompe (44) d'assistance de direction un couple de rotation du premier entraînement (16),
**caractérisé**
- **en ce qu'**il est prévu un autre arbre (68) de sortie pour entraîner le compresseur (28) débrayable et
- **en ce que** l'autre arbre (68) de sortie est monté sur un deuxième entraînement (18), auquel un couple de rotation de l'arbre (14) d'entraînement entraîné par le moteur (12) est transmis, l'autre arbre (68) de sortie transmettant au compresseur (28) débrayable un couple de rotation du deuxième entraînement (18).

2. Véhicule (10) suivant la revendication 1, **caractérisé en ce que** le premier entraînement (16) et le deuxième entraînement (18) sont différents.

3. Véhicule (10) suivant la revendication 1, **caractérisé**
- **en ce que** le deuxième entraînement (18) est identique au premier entraînement (16) et
- **en ce que** l'autre arbre (68) de sortie est monté sur le premier entraînement (16) parallèlement à l'arbre (66) de sortie, la transmission du couple de rotation de l'arbre (14) d'entraînement à l'arbre (66) de sortie et à l'autre arbre (68) de sortie s'effectuant indépendamment l'une de l'autre.

4. Véhicule (10) suivant l'une des revendications précédentes, **caractérisé en ce que** le compresseur (28) débrayable est accouplé à l'autre arbre (68) de sortie par un embrayage (24) pouvant être embrayé par un appareil (40) de commande.

5. Véhicule (10) suivant l'une des revendications précédentes, **caractérisé en ce que** l'appareil (40) de commande commande au moins une autre fonction d'un sécheur (30) d'air.

6. Véhicule (10) suivant l'une des revendications précédentes, **caractérisé en ce qu'**il est prévu un autre appareil (48) de commande, qui commande la pompe (44) d'assistance de direction.

7. Véhicule (10) suivant l'une des revendications précédentes, **caractérisé en ce que** l'autre appareil (48) de commande est constitué de manière à ce que l'autre appareil (48) de commande détecte au moins la pression de sortie de la pompe (44) d'assistance de direction.

8. Véhicule (10) suivant l'une des revendications précédentes, **caractérisé en ce que** l'appareil (40) de commande ou l'autre appareil (48) de commande est constitué de manière à ce que l'appareil (40) de commande ou l'autre appareil (48) de commande détecte la vitesse du véhicule (10).

9. Véhicule (10) suivant l'une des revendications précédentes, **caractérisé en ce que** l'autre appareil (48) de commande est propre à adapter le volume absorbé par tour de la pompe (44) d'assistance de direction en fonction de la vitesse du véhicule.

10. Véhicule (10) suivant l'une des revendications précédentes, **caractérisé en ce que** l'appareil (40) de commande et l'autre appareil (48) de commande sont constitués de manière à ce qu'au moins des messages d'erreur soient échangés entre l'appareil (40) de commande et l'autre appareil (48) de commande.

11. Véhicule (10) suivant l'une des revendications précédentes, **caractérisé en ce que** l'appareil (40) de commande est constitué de manière à ce que l'appareil (40) de commande calcule à partir de la vitesse du véhicule (10) des séquences d'interruption et des pressions d'interruption pour le compresseur (28) débrayable.

12. Véhicule (10) suivant l'une des revendications précédentes, **caractérisé en ce que** l'autre appareil (48) de commande est constitué de manière à ce que l'autre appareil (48) de commande calcule une pression d'assistance de direction à partir de la vitesse du véhicule (10).

13. Procédé de commande d'une pompe (44) d'assistance de direction et d'un compresseur (28) débrayable dans un véhicule (10) comprenant
- un arbre (14) d'entraînement, qui est entraîné par un moteur (12) et qui transmet à un premier entraînement (16) le couple de rotation produit par le moteur,
- un compresseur (28) débrayable et
- une pompe (44) d'assistance de direction, la pompe (44) d'assistance de direction étant entraînée par un arbre (66) de sortie, qui transmet à la pompe (44) d'assistance de direction un couple de rotation du premier entraînement (16),
**caractérisé**
- **en ce qu'**un couple de rotation est transmis à un deuxième entraînement (18) par l'arbre (14) d'entraînement entraîné par le moteur (12) et
- **en ce que** le compresseur (28) débrayable est entraîné par un autre arbre (68) de sortie monté sur le deuxième entraînement (18).

14. Procédé suivant la revendication 13, **caractérisé en ce qu'**au moins des messages d'erreur sont échangés entre un appareil (40) de commande commandant le débrayage (24) du compresseur et un autre appareil (48) de commande commandant la pompe (44) d'assistance de direction.

15. Procédé suivant la revendication 13 ou 14, **caractérisé en ce que** l'appareil (40) de commande ou l'autre appareil (48) de commande détecte la vitesse du véhicule (10).

16. Procédé suivant la revendication 15, **caractérisé en ce que** l'appareil (40) de commande calcule des séquences de débrayage et des pressions de débrayage pour le compresseur (28) de débrayable à partir de la vitesse du véhicule (10).

17. Procédé suivant la revendication 15 ou 16, **caractérisé en ce que** l'autre appareil (48) de commande calcule une pression d'assistance de direction à partir de la vitesse du véhicule (10).
